(19) Europäisches Patentamt
European Patent Office
Office européen des brevets

(11) EP 0 940 459 B1

(12) **EUROPÄISCHE PATENTSCHRIFT**

(45) Veröffentlichungstag und Bekanntmachung des Hinweises auf die Patenterteilung:
**16.08.2006 Patentblatt 2006/33**

(51) Int Cl.:
*C09D 201/00* (2006.01) *C09J 201/00* (2006.01)
*C09D 7/00* (2006.01) *C09J 11/06* (2006.01)

(21) Anmeldenummer: **99103598.1**

(22) Anmeldetag: **24.02.1999**

(54) **Beschichtungsmittel und Klebstoffe, ihre Verwendung und Verfahren zu ihrer Herstellung**

Coating agent and adhesives, their use and process for their preparation

Agent de revêtement et adhésifs, leur utilisation et procédé pour leur préparation

(84) Benannte Vertragsstaaten:
**BE DE ES FR GB IT NL SE**

(30) Priorität: **06.03.1998 DE 19809643**

(43) Veröffentlichungstag der Anmeldung:
**08.09.1999 Patentblatt 1999/36**

(73) Patentinhaber: **BASF Coatings Aktiengesellschaft**
**48165 Münster (DE)**

(72) Erfinder:
- **Bartol, Fritz**
**59071 Hamm (DE)**
- **Baumgart, Hubert**
**48163 Münster (DE)**
- **Rink, Heinz-Peter**
**48153 Münster (DE)**
- **Kraatz, Detlef**
**69121 Heidelberg (DE)**
- **Stammer, Achim**
**67251 Freinsheim (DE)**

(56) Entgegenhaltungen:
**EP-A- 0 553 663**

- **PATENT ABSTRACTS OF JAPAN vol. 1999, no. 13, 30. November 1999 (1999-11-30) & JP 11 228869 A (KANEGAFUCHI CHEM IND CO LTD), 24. August 1999 (1999-08-24)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Beschichtungsmittel und Klebstoffe, ihre Verwendung sowie Verfahren zu ihrer Herstellung.

Die heute bekannten Lacke, z.B. Klar- oder Decklacke, Füller und Grundierungen, oder Mittel für den Unterbodenschutz von Kraftfahrzeugen basieren auf Bindemitteln, die eine große Anzahl unterschiedlicher Eigenschaften aufweisen müssen, damit die benötigten Beschichtungseigenschaften erzielt werden können. Solche Lacksysteme sind beispielsweise aus den deutschen Patentschriften DE 44 07 415, DE 44 07 409 oder DE 43 10 414 bekannt. Der Nachteil all dieser Lacke ist, daß die Festkörpergehalte nicht unbegrenzt erhöht werden können. Eine Reduktion der Lösemittelemission ist somit bei diesen Systemen nur in engen Grenzen möglich. Dies gilt sinngemäß auch für Klebstoffe.

JP 11 228869 betrifft Zusammensetzungen, die keine Vernetzer enthalten dagegen einen Vemetzungskatalysator und eine OH-Komponente enthalten, die beide einen Schmelzpunkt von mindestens 45°C haben. Diethyloctandiole sind folglich nicht zu entnehmen.

JP-1996-59784 zielt im wesentlichen auf künstliches Leder o. Ä. ab, wobei fünf verschiedene Arten von eingesetzt werden. Diethyloctandiole sind nicht zu entnehmen.

WO 98/53013 offenbart Zusammensetzungen enthaltend Bindemittel, Vernetzer und Diole, jedoch keine Diethyloctandiole.

US 4,788,083 betrifft Katalysatorsysteme für Polyol/Polyisocyanat-Zusammensetzungen. Diese Katalysatorsysteme basieren auf Thiolverbindungen; Diethyloctandiole werden nicht offenbart.

Der vorliegenden Erfindung liegt somit die Aufgabe zugrunde, Beschichtungsmittel oder Klebstoffe zur Verfügung zu stellen, die gegenüber den bisher bekannten Beschichtungsmitteln einen erhöhten Festkörpergehalt aufweisen und emissionsarme Formulierungen ermöglichen. Im Falle der Beschichtungsmittel sollen dabei vor allem die Nachteile behoben werden, welche bei der Verwendung von üblichen und bekannten Reaktivverdünnern auftreten, wie die Anlösung weiterer Lackschichten bei der Applikation, der Erniedrigung der Thermostabilität und Lichtbeständigkeit. Außerdem sollen die neuen Beschichtungsmittel bei ansonsten unveränderten Basiseigenschaften eine verbesserte Kratzbeständigkeit und ein gutes Reflow-Verhalten aufweisen.

Diese Aufgabe wird erfindungsgemäß durch das neue Beschichtungsmittel oder den neuen Klebstoff, enthaltend

a) mindestens ein Bindemittel,

b) mindestens einen Vernetzer und

c) mindestens ein stellungsisomeres Diethyloctandiol,

gelöst.

Im Hinblick auf den Stand der Technik war es nicht zu erwarten, daß die Lösung der Aufgabe mit Hilfe der erfindungsgemäß zu verwendenden stellungsisomeren Diethyloctandiole gelöst werden kann, da zu befürchten war, daß auch diese Verbindungen die Nachteile sonstiger Reaktivverdünner aufweisen würden.

Im folgenden werden die erfindungsgemäß zu verwendenden stellungsisomeren Diethyloctandiole der Kürze halber als "funktionalisierte Alkane c)" bezeichnet.

Die erfindungswesentlichen funktionalisierten Alkane c) leiten sich ab von 4,5-Diethyl-octan, 3,5-Diethyl-octan oder 2,4-Diethyl-octan.

Für die vorliegende Erfindung ist es wesentlich, daß die funktionalisierten Alkane c) bei Raumtemperatur flüssig sind. Somit können entweder einzelne flüssige funktionalisierte Alkane c) verwendet werden oder flüssige Gemische dieser Verbindungen. Dies ist insbesondere dann der Fall, wenn funktionalisierte Alkane c) verwendet werden, welche wegen ihrer hohen Anzahl an Kohlenstoffatomen im Alkan-Grundgerüst als einzelne Verbindungen fest sind. Der Fachmann kann daher die entsprechenden funktionalisierten Alkane c) in einfacher Weise auswählen.

Für die Erfindung ist es außerdem wesentlich, daß die funktionalisierten Alkane c) einen Siedepunkt von über 200, vorzugsweise 220 und insbesondere 240 oC aufweisen. Darüber hinaus sollen sie eine niedrige Verdampfungsrate haben.

Herausragende Ergebnisse werden mit 2,4-Diethyl-octandiol-1,5 erzielt.

Die vorstehend beschriebenen funktionalisierten Alkane c) sind an sich bekannte Verbindungen und können mit Hilfe üblicher und bekannter Synthesemethoden der Organischen Chemie wie die basenkatalysierte Aldolkondensation hergestellt werden oder sie fallen als Nebenprodukte chemischer Großsynthesen wie der Herstellung von 2-Ethylhexanol an.

Die funktionalisierten Alkane c) sind im allgemeinen in den erfindungsgemäßen Beschichtungsmitteln und Klebstoffen in einer Menge von 0,5 bis 25 Gew.-%, bezogen auf die Gesamtmenge der Bestandteile a) + c), enthalten.

Zwar können sie hierin in größeren Mengen enthalten sein, indes handelt es sich um einen vorteilhaften Bereich, innerhalb dessen die erfindungsgemäßen Vorteile sicher und zuverlässig erzielt werden. Innerhalb dieses Bereichs ist derjenige von 1 bis 20 Gew.-% von besonderem Vorteil, weil die erfindungsgemäßen Beschichtungsmittel und Klebstoffe, welche diese Menge an funktionalisierten Alkanen c) enthalten, ein besonders vorteilhaftes Eigenschaftsprofil aufweisen. Ganz besondere Vorteile resultieren indes aus der Verwendung von 2 bis 15 Gew.-% an funktionalisierten Alkanen c).

Die erfindungsgemäßen Beschichtungsmittel und Klebstoffe enthalten als weiteren wesentlichen Bestandteil mindestens ein Bindemittel a). Hierbei handelt es sich im allgemeinen um ein oligomeres oder polymeres Harz, welches funktionelle Gruppen aufweist, die mit dem Vernetzer b) unter Bildung dreidimensionaler Netzwerke reagieren. Hierbei kann es sich um beliebige übliche und bekannte funktionelle Gruppen handeln. Erfindungsgemäß ist es indes von Vorteil, wenn die Bindemittel a) funktionelle Gruppen derselben Art wie die funktionalisierten Alkane c) aufweisen.

Für das hydroxyfunktionelle Bindemittel a) oder für die Mischung aus hydroxyfunktionellen Bindemitteln a) kommen vorzugsweise hydroxyfunktionelle Polyacrylate, Polyester, Polyurethane, acrylierte Polyurethane, acrylierte Polyester, Polylactone, Polycarbonate, Polyether und/oder (Meth)Acrylatdiole a) in Betracht. Hydroxyfunktionelle Bindemittel a) sind dem Fachmann bekannt, und zahlreiche geeignete Beispiele sind marktgängig.

Vorzugsweise werden Polyacrylate, Polyester und/oder Polyurethane, insbesondere Polyacrylate und/oder Polyester a) verwendet.

Polyacrylatharze a) weisen OH-Zahlen von 40 bis 240, vorzugsweise 60 bis 210, ganz besonders bevorzugt 100 bis 200, Säurezahlen von 0 bis 35, bevorzugt 0 bis 23, ganz besonders bevorzugt 3,9 bis 15,5, Glasübergangstemperaturen von -35 bis +70°C, bevorzugt -20 bis +40 °C, ganz besonders bevorzugt -10 bis +15 °C und zahlenmittlere Molekulargewichte von 1500 bis 30000, bevorzugt 1500 bis 15000, ganz besonders bevorzugt 1500 bis 5000 auf.

Die Glasübergangstemperatur der Polyacrylatharze a) wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen a) näherungsweise berechnet werden können, vorgenommen werden:

$$1/Tg = \sum_{n=1}^{n=x} W_n / Tg_n \quad ; \sum_n W_n = 1$$

Tg = Glasübergangstemperatur des Polyacrylatharzes
$W_n$ = Gewichtsanteil des n-ten Monomers
$Tg_n$ = Glasübergangstemperatur des Homopolymers aus dem n-ten Monomer
X = Anzahl der verschiedenen Monomeren

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als hydroxyfunktionelle Bindemittelkomponente a) können beispielsweise auch Polyacrylatharze eingesetzt werden, die herstellbar sind, indem (a1) 10 bis 92, vorzugsweise 20 bis 60 Gew. -% eines Alkyl- oder Cycloalkylacrylates oder eines Alkyl- oder Cycloalkylmethacrylates mit 1 bis 18, vorzugsweise 4 bis 13 Kohlenstoffatomen im Alkyl- bzw. Cycloalkylrest oder Mischungen aus solchen Monomeren, (a2) 8 bis 60, vorzugsweise 12,5 bis 38,5 Gew.-% eines Hydroxyalkylacrylates oder eines Hydroxylalkylmethacrylates mit 2 bis 4 Kohlenstoffatomen im Hydroxyalkylrest oder Mischungen aus solchen Monomeren, (a3) 0,0 bis 5,0, vorzugsweise 0,7 bis 3,0 Gew.-% Acrylsäure oder Methacrylsäure oder Mischungen aus diesen Monomeren und (a4) 0 bis 50, vorzugsweise 0 bis 30 Gew.-% von (a1), (a2) und (a3) verschiedene, mit (a1), (a2) und (a3) copolymerisierbare ethylenisch ungesättigte Monomere oder Mischungen aus solchen Monomeren zu Polyacrylatharzen mit Hydroxylzahlen von 40 bis 240, vorzugsweise 60 bis 150, Säurezahlen von 0 bis 35, vorzugsweise von 5 bis 20, Glasübergangstemperaturen von -35 bis +70 Grad C, bevorzugt von -20 bis +40 Grad C und zahlenmittleren Molekulargewichten von 1500 bis 30000, vorzugsweise von 1500 bis 15000, (gelpermeationschromatographisch mit Polystyrolstandard bestimmt) polymerisiert werden. Als Beispiele für (a1)-Komponenten werden genannt: Methyl-, Ethyl-, Propyl-, n-Butyl-, Isobutyl-, tert.-Butyl-, Pentyl-, Hexyl-, Heptyl- und 2-Ethyl-hexylacrylat bzw. -methacrylat sowie Cyclohexylacrylat und Cyclohexylmethacrylat. Als Beispiele für (a2)-Komponenten werden genannt Hydroxyethyl-, Hydroxypropyl- und Hydroxybutylacrylat bzw -methacrylat. Als Beispiele für (a4)-Komponenten werden genannt: Vinylaromaten, wie beispielsweise Styrol, Vinyltoluol, alpha-Methylstyrol, alpha-Ethylstyrol, kemsubstituierte Diethylstyrole, Isopropylstyrol, Butylstyrole und Methoxystyrole; Vinylether, wie beispielsweise Ethylvinylether,

n-Propylvinylether, Isopropylvinylether, n-Butylvmylether und Isobutylvinylether und Vinylester, wie beispielsweise Vinylacetat, Vinylpropionat, Vinylbutyrat, Vinylpivalat und der Vinylester der 2-Methyl-2-ethylheptansaure. Die Hydroxylzahl und die Säurezahl der Polyacrylatharze kann der Fachmann problemlos durch die Menge an eingesetzter Komponente (a2) bzw. (a3) steuern.

Als Polyacrylatkomponenten a) sind ferner die in der europäischen Patentanmeldung EP 0 767 185 sowie den US-Patenten 5 480 943, 5 475 073 und 5 534 598 genannten hydroxyfunktionellen Verbindungen geeignet.

Als hydroxyfunktionelle Bindemittelkomponente a) werden beispielsweise darüber hinaus Polyacrylatharze eingesetzt, die erhältlich sind, indem (a1) 10 bis 51 Gew.-%, vorzugsweise 25 bis 41 Gew,-%, 4-Hydroxy-n-butylacrylat oder 4-Hydroxy-n-butylmethacrylat oder eine Mischung aus 4-Hydroxy-n-butylacrylat und 4-Hydroxy-n-butylmethacrylat, vorzugsweise 4-Hydroxy-n-butylacrylat, (a2) 0 bis 36 Gew.-%, vorzugsweise 0,1 bis 20 Gew.-%, eines von (a1) verschiedenen hydroxylgruppenhaltigen Esters der Acrylsäure oder eines hydroxylgruppenhaltigen Esters der Methacrylsäure oder eines Gemisches aus solchen Monomeren, (a3) 28 bis 85 Gew.-%, vorzugsweise 40 bis 70 Gew.-% eines von (a1) und (a2) verschiedenen aliphatischen oder cycloaliphatischen Esters der Methacrylsäure mit mindestens 4 C-Atomen im Alkoholrest oder eines Gemisches aus solchen Monomeren, (a4) 0 bis 3 Gew.-%, vorzugsweise 0,1 bis 2 Gew.-%, einer ethylenisch ungesättigten Carbonsäure oder einer Mischung aus ethylenisch ungesättigten Carbonsäuren und (a5) 0 bis 20 Gew.-%, vorzugsweise 5 bis 15 Gew.-% eines von (a1), (a2), (a3) und (a4) verschiedenen ungesättigten Monomeren oder eines Gemisches aus solchen Monomeren zu einem Polyacrylatharz a) mit einer Hydroxylzahl von 60 bis 200, vorzugsweise von 100 bis 160, einer Säurezahl von 0 bis 35, vorzugsweise von 0 bis 25, und einem zahlenmittleren Molekulargewicht von 1500 bis 10000, vorzugsweise 2500 bis 5000, polymerisiert werden, wobei die Summe der Gewichtsteile der Komponenten (a1) bis (a5) stets 100% ergibt und die Zusammensetzung der Komponente (a3) so gewählt wird, daß bei alleiniger Polymerisation der Komponente (a3) ein Polymethacrylatharz mit einer einer Glasübergangstemperatur von +10 bis +100 Grad C, vorzugsweise von +20 bis -60 Grad C, erhalten wird. Als Beispiele für die Komponente (a2) werden genannt: Hydroxyalkylester der Acrylsäure, wie z.B. Hydroxyethylacrylat und Hydroxypropylacrylat und Hydroxyalkylester der Methacrylsäure, wie z.B. Hydroxyethylmethacrylat und Hydroxypropylmethacrylat, wobei die Wahl so zu treffen ist, daß bei alleiniger Polymerisation der Komponente (a2) ein Polyacrylatharz mit einer Glasübergangstemperatur von 0 bis +80 Grad C, vorzugsweise von +20 bis +60 Grad C erhalten wird. Als Beispiele für die Komponente (a3) werden genannt: aliphatische Ester der Methacrysäure mit 4 bis 20 C-Atomen im Alkoholrest, wie z.B. n-Butyl-, iso-Butyl-, tert.-Butyl-, 2-Ethylhexyl-, Stearyl- und Laurylmethacrylat, und cycloaliphatische Ester der Methacrylsäure wie, z.B Cyclohexylmethacrylat. Als Komponente (a4) werden vorzugsweise Acrylsäure und/oder Methacrylsäure eingesetzt. Als Beispiele für die Komponente (a5) werden genannt: vinylaromatische Kohlenwasserstoffe, z.B. Styrol, a-Alkylstyrol und Vinyltuluol, Amide der Acrylsäure und Methacrylsäure, z.B. Methacrylamid und Acrylamid, Nitrile der Acrylsäure und Methacrylsäure, Vinylether und Vinylester. Als Komponente (a5) werden vorzugsweise vinylaromatische Kohlenwasserstoffe, insbesondere Styrol, eingesetzt. Die Zusammensetzung der Komponente (a5) ist vorzugsweise so zu treffen ist, daß bei alleiniger Polymerisation der Komponente (a5) ein Polymer mit einer Glasübergangstemperatur von -70 bis +120 Grad C, vorzugsweise von -80 bis +100 Grad C erhalten wird. Die Herstellung dieser Polyacrylatharze a) kann nach allgemein gut bekannten Polymerisationsverfahren (siehe z.B. Houben-Weyl, Methoden der organischen Chemie, 4. Auflage, Band 14/1, Seite 24 bis 255 (1961)) erfolgen. Sie werden vorzugsweise mit Hilfe der Lösungsmittelpolymerisation hergestellt. Hierbei wird üblicherweise ein organisches Lösungsmittel bzw. Lösungsmittelgemisch vorgelegt und zum Sieden erhitzt. In dieses organische Lösungsmittel bzw. Lösungsmittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 200 Grad C, vorzugsweise zwischen 130 und 180 Grad C. Als Polymerisationsinitiatoren werden vorzugsweise freie Radikale bildende Initiatoren eingesetzt. Initiatorenart und -menge werden üblicherweise so gewählt, daß bei der Polymerisationstemperatur während der Zulaufphase ein möglichst konstantes Radikalangebot vorliegt. Als Beispiele für einsetzbare Initiatoren werden genannt: Dialkylperoxide, z.B. Di-tert.-Butylperoxid und Dicumylperoxid, Hydroperoxide, z.B. Cumolhydroperoxid und tert.-Butylhydroperoxid, Perester, z.B. tert.-Butylperbenzoat, tert.-Butylperpivalat, tert.-Butylper-3,5,5-trimethylhexanoat und tert.-Butylper-2-ethylhexanoat sowie Bisazoverbindungen wie Azobisisobutyronitril. Die Polymerisationsbedingungen (Reaktionstemperatur, Zulaufzeit der Monomerenmischung, Menge und Art der organischen Lösungsmittel und Polymerisationsinitiatoren, evt. Mitverwendung von Molekulargewichtsreglern, z.B. Mercaptane, Thioglykolsäureester und Chlorwasserstoffe) werden so ausgewählt, daß die Polyacrylatharze a) ein zahlenmittleres Molekulargewicht wie angegeben (bestimmt durch Gelpermeationschromatographie unter Verwendung von Polystyrol als Eichsubstanz) aufweisen. Die Säurezahl kann vom Fachmann durch Einsatz entsprechender Mengen der Komponente (a4) eingestellt werden. Analoges gilt für die Einstellung der Hydroxylzahl. Sie ist über die Menge an eingesetzter Komponente (a1) und (a2) steuerbar.

Darüberhinaus können marktgängige Polyacrylate verwendet werden die unter der Marke Joncryl$^{R}$ verkauft werden, wie etwa Joncryl$^{R}$ SCX 912 und 922.5.

Geeignete Polyesterharze bzw. Alkydharze ea) ingesetzt werden, sind herstellbar, indem (a1) eine cycloaliphatische oder aliphatische Polycarbonsäure oder eine Mischung aus solchen Polycarbonsäuren (a2) ein aliphatisches

oder cycloaliphatisches Polyol mit mehr als zwei Hydroxylgruppen im Molekül oder eine Mischung aus solchen Polyolen (a3) ein aliphatisches oder cycloaliphatisches Diol oder eine Mischung aus solchen Diolen und (a4) eine aliphatische lineare oder verzweigte gesättigte Monocarbonsäure oder eine Mischung aus solchen Monocarbonsäuren in einem molaren Verhältnis von (a1) : (b1) : (c1) : (d1) = 1,0 : 0,2 - 1,3 : 0,0 - 1,1 : 0,0 - 1,4, vorzugsweise 1,0 : 0,5 - 1,2 : 0,0 - 0,6 : 0,2 - 0,9 zu einem Polyesterharz bzw. Alkydharz umgesetzt werden. Als Beispiele für den Bestandteil (a1) werden genannt: Hexahydrophtalsäure, 1,4-Cyclohexandicarbonsäure, Endomethylentetrahydrophtalsäure, Oxalsäure, Malonsäure, Bernsteinsäure, Glutarsäure, Adipinsäure, Pimelinsäure, Korksäure, Azelainsäure und Sebacinsäure. Als Beispiele für den Bestandteil (a2) werden genannt: Pentaerythrit, Trimethylolpropan, Trimethylolethan und Glycerin. Als Beispiele für den Bestandteil (a3) werden genannt: Ethylenglykol, Diethylenglykol, Propylenglykol, Neopentylglykol, 2-Methyl-2-propylpropandiol-1,3,2-Ethyl-2-butylpropandiol-1,3, 2,2,4-Trimethyl-pentandiol-1,5, 2,2,5-Trimethylhexandiol-1,6, Hydroxypivalinsäureneopentylglykolester und Dimethylolcyclohexan. Als Beispiele für den Bestandteil (a4) werden genannt: 2-Ethylhexansäure, Laurinsäure, Isooctansäure, Isononansäure und Monocarbonsäuremischungen, die aus Kokosfett oder Palmkernfett gewonnen werden.

Die Herstellung von Hydroxylgruppen tragenden Polyester- und/oder Alkydharzen a) ist z.B. in Ullmänns Encyklopädie der technischen Chemie, dritte Auflage, 14. Band, Urban & Schwarzenberg, München, Berlin 1863, Seiten 80 bis 89 und Seiten 99 bis 105, in den Büchern: Résines Alkydes-Polyesters von J. Bourry, Paris Verlag Dunod 1952, Alkyd Resins von C.R. Martens, Reinhold Publishing Corporation, New York 1961 und Alkyd Resin Technology von T.C. Patton, Interscience Publishers 1962 beschrieben.

Darüberhinaus kommen auch Bindemittel auf der Basis von Polyurethanen a) in Betracht. Urethan(meth)acrylate a) sind dem Fachmann wohl bekannt und brauchen daher nicht näher erläutert zu werden. Beispiele für geeignete Polyurethanharze a) sind die in den Patentschriften EP 0 708 788, DE 44 01 544 oder DE 195 34 361 beschriebenen Harze.

Durch den teilweisen Ersatz der beschriebenen Bindemittel bzw. Bindemittelgemische a) durch die erfindungsgemäß zu verwendenden funktionalisierten Alkane c) lassen sich überraschenderweise höhere Festkörpergehalte erzielen, ohne daß wesentliche Nachteile bezüglich der Eigenschaftsprofile der Beschichtungen oder Klebstoffe auftreten. So ist es gelungen, bei deutlich höheren Festkörpergehalten der erfindungsgemäßen Beschichtungsmittel ebensogute Werte hinsichtlich der Kratzfestigkeit und Filmhärte bei vergleichbarer Säurebeständigkeit der Beschichtungen zu erzielen, wie dies nach dem Stand der Technik bisher nur unter Einhaltung von geringeren Festkörpergehalten möglich war. Erfindungsgemäß ist es damit insbesondere möglich, ein höheres Reflow-Potential und eine, bedingt durch den höheren Festkörpergehalt, Reduktion der Lösemittelemission zu erzielen.

Neben den beschriebenen Bindemitteln a) sind in den erfindungsgemäßen Beschichtungsmitteln und Klebstoffen auch weitere nach dem Stand der Technik übliche Bestandteile enthalten. Hierbei ist es möglich, die erfindungsgemäßen Beschichtungsmittel als Ein- oder auch Mehrkomponentensysteme auszulegen. Derartige Systeme unterscheiden sich im wesentlichen durch die Art des eingesetzten Vernetzers b). In beiden Fällen kommen alle Vernetzer b) in Betracht, welche mit Hydroxylgruppen unter den Härtungsbedingungen reagieren. Beispiele geeigneter Vernetzer b) sind Aminoplastharze, Siloxangruppen enthaltende Verbindungen oder Harze, Anhydridgruppen enthaltende Verbindungen oder Harze, blockierte und unblockierte Polyisocyanate und/oder Alkoxycarbonylaminotriazine, insbesondere aber blockierte Polyisocyanate und/oder Tris(alkoxycarbonylamino)triazine b).

Sowohl in Ein- als auch Zweikomponentensystemen können erfindungsgemäß blockierte Isocyanate b) oder eine Mischung aus blockierten Polyisocyanaten b) zum Einsatz kommen.

Die einsetzbaren blockierten Isocyanate b) sind vorzugsweise so ausgebildet, daß sie sowohl mit einem Blokkierungsmittel (Z1) als auch mit einem Blockierungsmittel (Z2) blockierte Isocyanatgruppen enthält, wobei das Blockierungsmittel (Z1) ein Dialkylmalonat oder eine Mischung aus Dialkylmalonaten ist, das Blockierungsmittel (Z2) ein von (Z1) verschiedenes, aktive Methylengruppen enthaltendes Blockierungsmittel, ein Oxim oder eine Mischung aus diesen Blockierungsmitteln ist und das Äquivalentverhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Das blockierte Isocyanat b) wird vorzugsweise wie folgt hergestellt:
Außerdem kommen Dimethylpyratol und/oder substituierte Triazole als Blockierungsmittel in Betracht.

Ein Polyisocyanat oder eine Mischung aus Polyisocyanaten wird in an sich bekannter Art und Weise mit einer Mischung aus den Blockierungsmitteln (Z1) und (Z2) umgesetzt, wobei die Mischung aus den Blockierungsmitteln (Z1) und (Z2) die Blockierungsmittel (Z1) und (Z2) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Das Polyisocyanat bzw. die Mischung aus Polyisocyanaten kann mit der Mischung aus den Blockierungsmitteln (Z1) und (Z2) so weit umgesetzt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern.

Es wurde gefunden, daß auch dann Lacke mit guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (Z1) und (Z2) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexandiol-1,6 oder das als Bestandteil (1) einsetzbare hydroxylgruppenhaltige Bindemittel a) eingesetzt.

Ein geeignetes blockiertes Polyisocyanat b) ist auch erhältlich, indem mit dem Blockierungsmittel (Z1) bzw. (Z2) blockierte Polyisocyanate in einem solchen Verhältnis gemischt werden, daß eine Mischung erhalten wird, in der das Äquivalent-Verhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besondere bevorzugt zwischen 7,5 : 2,5 und 6,5 : 3,5 liegt.

Prinzipiell können alle auf dem Lackgebiet einsetzbaren Polyisocyanate zur Herstellung des blockierten Polyisocyanats eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethan- diisocyanat, 1,3-Bis-(2-isocyanatopropyl-2)-benzol (TMXDI) und 1,4-und 1,3-Bis-(isocyanatomethyl)-cycloalkane wie 1,4- und 1,3-Bis-(isocyanatomethyl)-cycolhexan sowie Addukte dieser Polyisocyanate an Polyole, insbesondere niedermolekulare Polyole, wie z.B. Trimethylolpropan und von diesen Polyisocyanaten abgeleitete isocyanuratgruppen-und/oder biuretgruppenhaltige Polyisocyanate.

Als Polyisocyanate werden besonders bevorzugt Hexamethylendiisocyanat und Isophorondiisocyanat, von diesen Diisocyanaten abgeleitete isocyanurat- oder biuretgruppenhaltige Polyisocyanate, die vorzugsweise mehr als zwei Isocyanatgruppen im Molekül enthalten, sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Aquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Als Blocklerungsmittel (Z1) werden Dialkylmalonate oder eine Mischung aus Dialkylmalonaten eingesetzt. Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylestar, wobei Malonsäurediethylester bevorzugt eingesetzt wird. Als Blockierungsmittel (Z2) werden von (Z1) verschiedene, aktive Methylengruppen enthaltende Blockierungsmittel und Oxime sowie Mischungen aus diesen Blockierungsmitteln eingesetzt. Als Beispiele für Blockierungsmittel, die als Blockierungsmittel (Z2) einsetzbar sind, werden genannt: Acetessigsäuremethyl-, ethyl-, -propyl-, butyl-, -pentyl-, hexyl-, heptyl-, octyl-, nonyl-, -decyl- oder -dodecylester, Acetonoxim, Methylethylketoxim, Acetylaceton, Formaldoxim, Acetaldoxim, Benzophenoxim, Acetoxim und Diisobutylketoxim. Als Blockierungsmittel (Z2) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (Z2) eingesetzt.

Als Vernetzer b) können auch Tris(alkoxycarbonylamino)triazine b) der Formel

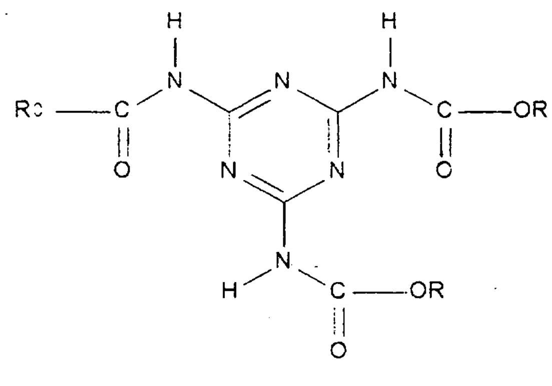

eingesetzt werden, wobei R=Methyl, und/oder Alkylgruppen, insbesondere Butylgruppen, bedeuten. Ebenso können Derivate der genannten Verbindungen zum Einsatz kommen. Bevorzugt werden für als Vernetzer b) Tris(alkoxycarbonylamino)triazine eingesetzt, wie sie in der US-Patentschrift 5084541 beschrieben sind.

Die erfindungsgemäßen Beschichtungsmittel können auch Mehrkomponentensysteme, vorzugsweise Zweikomponentensystem, sein. In diesem Fall weist das Beschichtungsmittel eine zweite Komponente auf, die als Vernetzer

b) mindestens ein gegebenenfalls in einem oder mehreren organischen Lösungsmittel gelöstes nichtblockiertes Di- und/oder Polyisocyanat b) enthält. Zusätzlich kann aber auch blockiertes Polyisocyanat oder eine Mischung aus blockierten Polyisocyanaten b) in der zweiten Komponente vorhanden sein.

Bei dem einsetzbaren freien Polyisocyanatbestandteil b) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPa.s (bei 23 Grad C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Polyisocyanates zu verbessern und gegebenenfalls die Viskosität des Polyisocyanats auf einen Wert innerhalb der obengenannten Bereiche abzusenken.

Als Zusatzmittel geeignete Lösemittel für die Polyisocyanate sind beispielsweise Ethoxyethylpropionat, Butylacetat und ähnliches. Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben.

Beispielsweise geeignet sind Polyisocyanate und/oder isocyanatgruppenhaltigen Polyurethanpräpolymere b), die durch Reaktion von Polyolen mit einem Überschuß an Polyisocyanaten hergestellt werden können und die bevorzugt niederviskos sind. Es können auch Isocyanuratgruppen und/oder Biuretgruppen und/oder Allophanatgruppen und/oder Urethangruppen und/oder Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatapropylcyclohexylisocyanat, Dicyclohexylmethan-2,4'-diisocyanat oder Dicyclohexylmethan-4,4'-diisocyanat oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil b) kann im übrigen auch aus beliebigen Gemischen der beispielhaft genannten freien Polyisocyanate bestehen.

Im einzelnen kann das erfindungsgemäße Beschichtungsmittel weiterhin UV-Absorber und Radikalfänger enthalten. Es kann ferner Katalysatoren für die Vernetzung enthalten. Hierfür kommen insbesondere metallorganische Verbindungen, vorzugsweise Zinn und/oder wismutorganische Verbindungen in Betracht. Ebenso können tertiäre Amine in Frage kommen. Das Beschichtungsmittel kann ferner Rheologiemittel sowie sonstige Lackhilfsstoffe enthalten. Selbstverständlich können auch Pigmente jeglicher Art, beispielsweise Farbpigmente wie Azopigmente, Phthalocyaninpigmente, Carbonylpigmente, Dioxazinpigmente, Titandioxid, Farbruß, Eisenoxide und Chrom- bzw. Kobaltoxide, oder Effektpigmente wie Metallplättchenpigmente, insbesondere Aluminiumplättchenpigmente und Perlglanzpigmente. Weiterhin kann das erfindungsgemäße Beschichtungsmittel ggfs. noch übliche Hilfsmittel und/oder Additive enthalten, beispielsweise Slipadditive, Polymerisationsinhibitoren, Mattierungsmittel, Entschäumer, Verlaufsmittel und filmbildende Hilfsmittel, z.B. Cellulose-Derivate, oder andere, in Basislacken üblicherweise eingesetzten Additive. Diese üblichen Hilfsmittel und/oder Additive werden üblicherweise in einer Menge von bis zu 15 Gew.-%, bevorzugt 2 bis 9 Gew.-%, bezogen auf das Gewicht des Beschichtungsmittels ohne Pigmente und ohne Füllstoffe, eingesetzt.

Die Herstellung des erfindungsgemäßen Beschichtungsmittels erfolgt in erfindungsgemäßer Verfahrensweise, indem 0,5 bis 25 Gew.-%, vorzugsweise 1 bis 20 und insbesondere 2 bis 15 Gew.-% des Bindemittels a) eines Beschichtungsmittels oder eines Klebstoffs durch mindestens ein erfindungsgemäß zu verwendendes funktionalisiertes Alkan c) substituiert wird. Hierfür werden die üblichen Methoden wie das Zusammengeben der einzelnen Bestandteile und ihr Vermischen unter Rühren angewandt. Die Herstellung des aus zwei oder mehr Komponenten bestehenden Beschichtungsmittels erfolgt ebenfalls mittels Rühren bzw. Dispergieren unter Verwendung der üblicherweise eingesetzten Vorrichtungen, beispielsweise mittels Dissolver o.ä. oder mittels ebenfalls üblicherweise eingesetzter Zweikomponenten-Dosier- und -mischanlagen. Die einzelnen Komponenten werden bis zu ihrer bestimmungsgemäßen Verwendung getrennt gelagert.

Das erfindungsgemäße Beschichtungsmittel oder der erfindungsgemäße Klebstoff ist vorzugsweise als nichtwäßrige Lösung oder Dispersion (i.e. mit organischen Lösungsmitteln) formuliert. Hierfür können die in der Lack- oder Klebstoffherstellung üblichen organischen Lösungsmittel Verwendung finden.

Das erfindungsgemäßen Beschichtungsmittel wird vor allem zur Herstellung von beschichteten Formteilen oder Verbundteilen, welche Folien, Glas, Holz, Papier und/oder Metall enthalten oder hieraus bestehen, durch Auftragen des Beschichtungsmittels auf den entsprechenden Formteilen und Aushärten der resultierenden Beschichtung verwendet.

Das erfindungsgemäße Beschichtungsmittel wird vorzugsweise zur Herstellung von Ein- oder Mehrschichtlackierungen und besonders bevorzugt zur Herstellung von Decklacken eingesetzt. Es kann aber auch zur Herstellung

eines über einer Basislackschicht zu applizierenden Klarlacks, beispielsweise eines Klarlacks einer nach dem naß-in-naß-Verfahren hergestellten Mehrschichtlackierung bestimmt sein. Darüber hinaus kann es auch als Grundierung, Füller oder Unterbodenschutz verwendet werden. Selbstverständlich können die Kunststoffe oder die anderen Substrate auch direkt mit dem Klarlack oder dem Decklack beschichtet werden.

Die Beschichtungsmittel können sowohl bei der Serien- als auch bei der Reparaturlackierung von Automobilkarosserien eingesetzt werden. Sie werden aber bevorzugt im Bereich der Serienlackierung eingesetzt.

Der erfindungsgemäße Klebstoff dient zur Herstellung von verklebten Verbundteilen, welche Folien, Kunststoffe, Glas, Holz, Papier und/oder Metall enthalten oder hieraus bestehen, indem der Klebstoff auf der ohne den zu verklebenden Oberfläche(n) einer Folie oder eines Kunststoff, Glas, Holz, Papier und/oder Metall enthaltenden oder heraus bestehenden Formteils und/oder der oder den Oberfläche(n) des Teils, der hiermit verklebt werden soll, aufgetragen und gegebenenfalls vorgehärtet wird, wonach die betreffenden zu verklebenden Oberflächen in Kontakt gebracht werden und hiernach der Klebstoff ausgehärtet wird.

Die Applikation erfolgt im allgemeinen mit Hilfe üblicher Methoden, beispielsweise durch Spritzen, Rakeln, Tauchen oder Streichen.

Die erfindungsgemäßen Beschichtungsmittel oder Klebstoffe werden vorzugsweise bei Temperaturen von Raumtemperatur bis zu 180 °C gehärtet. Besonders bevorzugt sind Temperaturen zwischen 60 und 180 °C. In speziellen Anwendungsformen der erfindungsgemäßen Beschichtungsmittel können auch tiefere Härtungstemperaturen von 60 bis 160 °C angewendet werden.

Formteile und Verbundteile, welche Folien, Kunststoffe, Glas, Holz, Papier und/oder Metall enthalten oder hieraus bestehen und mindestens eine Schicht des ausgehärteten Bindemittels und/oder mindestens eine Schicht des ausgehärteten Klebstoffs enthalten, weisen gegenüber herkömmlichen Form- und Verbundteilen hinsichtlich der Thermostabilität, Lichtbeständigkeit, Kratzfestigkeit und Wetterbeständigkeit deutliche Vorteile auf.

Die Erfindung wird im folgenden unter Bezugnahme auf die Beispiele näher beschrieben:

**Beispiel**

**Tabelle 1:**

Zusammensetzung des erfindungsgemäßen (B, C) und des herkömmlichen (A) Zweikomponentensystems

| Bestandteile | Zusammensetzung | A | B | C |
|---|---|---|---|---|
| | | | (Gew.-Teile) | |
| **Komponente I[k]** | | | | |
| Isocyanathärter[a] | | 33 | 37,0 | 45,7 |
| **Komponente II[i,k]** | | | | |
| OH-Acrylat[b] | | 83 97 | 75 | 67,3 |
| Diethyl-octandiol[i] | | | 4.5 | 9.0 |
| TIN 384[c] | | 1.2 | 1.2 | 1.2 |
| TIN 292[d] | | 1.0 | 1.0 | 1.0 |
| DBTL[e] | | 0.004 | 0.004 | 0.004 |
| Worlee[R]-ADD315[f] | | 0.096 | 0.096 | 0.096 |
| ZN 73-1280[g] | | 1.5 | 1.5 | 1.5 |
| Butylglykolacetat | | 3.93 | 3.93 | 3.93 |
| Xylol | | 0.2 | 4.67 | 4.67 |
| Solventnaphtha | | | | 3.2 |
| GB-Ester[h] | | 4.5 | 4.5 | 4.5 |
| Ethoxypropylacetat | | 2.0 | 2.0 | 2 0 |
| Butanol | | 1.6 | 1.6 | 1.6 |
| Summe | | 100 | 100 | 100 |

a) = 80%ige Anlösung v. Desmodur N3390 (Polyisocyanat auf Basis Hexamethylendiisocyanat der Firma Bayer) in Butylacetat u. Solventnaphtha (Vernetzer b)

b) = übliches und bekanntes Acrylatharz aus Styrol, n-Butylmethacrylat, t-Butylacrylat, Hydroxipropylmethacrylat u. Acrylsäure als Acrylatharz (verdünnt auf 53 % Feststoffgehalt mit einer Mischung aus Methoxipropylacetat, Butylglykolacetat und Butylacetat) (Bindemittel a)

i) = Gemisch verschiedener stellungsisomerer Diethyloctandiole c) aus der großtechnischen Herstellung von 2-Ethyl-hexanol; Gaschromatogramm an silylierter Probe:

| Retentionszeit (min) | Flächen-% |
|---|---|
| 23,01 | 0,5 |
| 23,14 | 0,8 |
| 23,67 | 32,1 |
| 23,71 | 14,4 |
| 23,82 | 28,1 |
| 23,85 | 18,6 |
| 28,53 | 0,6 |
| 30,55 | 1,0 |

c) = handelsübliches Lichtschutzmittel Tinuvin 384R der Firma Ciba Specialty Chemical Inc.

d) = handelsübliches Lichtschutzmittel Tinuvin 292R der Firma Ciba Specialty Chemical Inc.

e) = Dibutylzinndilaurat

f) = handelsübliches Verlaufsadditiv der Firma Worlee, Lauenburg

g) = 5%ige Lösung eines mit Plyether substituierten Polydimethylsiloxans in Xylol

h) = Glykolsäure-butylester der Firma Wacker

**j = Viskosität der Komponente II (DIN 4-Becher s bei 23°C):**

| Zusammensetzung (Gew.-Teile) | A | B | C |
|---|---|---|---|
| | 29s | 22s | 20,5s |

**k = Festkörper Komponente I u. II (1h 125°C) bei Verarbeitungsviskosität:**

| | A | B | C |
|---|---|---|---|
| | 53,6% | 61,0% | 61,5% |

<u>Lacktechnische Prüfungen:</u>

1. BART-Test (Chemikalienbeständigkeit)

Der BART (BASF ACID RESISTANCE TEST) dient der Ermittlung der Beständigkeit von Lackoberflächen gegen Säuren, Laugen und Wassertropfen. Dabei wird die Beschichtung auf einem Gradientenofen nach der Einbrennung weiteren Temperaturbelastungen ausgesetzt (30 min 40°C, 50°C, 60°C und 70°C). Zuvor werden die Testsubstanzen (Schwefelsäure 1%ig, 10%ig, 36%ig; schweflige Säure 6%ig Salzsäure 10%ig; Natronlauge 5%ig; VE (= vollentsalztes) Wasser - 1,2,3 bzw. 4 Tropfen definiert mit einer Dosierpipette aufgebracht. Im Anschluß an die Einwirkung der Substanzen werden diese unter fließendem Wasser entfernt und die Beschädigungen nach 24 h entsprechend einer vorgegebenen Skala visuell beurteilt:

| Benotung | Aussehen |
|---|---|
| 0 | kein Defekt |
| 1 | leichte Markierung |
| 2 | Markierung / Vermattung / keine Erweichung |
| 3 | Markierung / Vermattung / Farbtonveränderung / Erweichung |
| 4 | Risse / beginnende Durchätzung |
| 5 | Klarlack entfernt |

Es wird jede einzelne Markierung (Spot) ausgewertet und das Ergebnis für jede Beschichtung in geeigneter Form (z.B. Notensummen für eine Temperatur) festgehalten. Die Ergebnisse finden sich in der Tabelle 1.

**Tabelle 1: Ergebnis der lacktechnischen Prüfung nach dem BART-Test**

| | Zusammensetzung A | | | | Zusammensetzung B | | | | Zusammensetzung C | | | |
|---|---|---|---|---|---|---|---|---|---|---|---|---|
| Temperatur (°C) | 40 | 50 | 60 | 70 | 40 | 50 | 60 | 70 | 40 | 50 | 60 | 70 |
| $H_2SO_4$ 1%ig | 0 | 0 | 0 | 4,5 | 0 | 0 | 0 | 4,5 | 0 | 0 | 0 | 4 |
| $H_2SO_4$ 10%ig | 0 | 0 | 0 | 4,5 | 0 | 0 | 0 | 4,5 | 0 | 0 | 0 | 4 |
| $H_2SO_4$ 36%ig | 0 | 0 | 0 | 4,5 | 0 | 0 | 0,5 | 4,5 | 0 | 0 | 0 | 4 |
| HCl 10%ig | 0 | 0 | 0 | 2 | 0 | 0 | 0 | 1,5 | 0 | 0 | 0 | 2 |
| $H_2SO_3$ 5%ig | 0 | 0 | 0 | 4 | 0 | 0 | 0 | 4 | 0 | 0 | 0 | 4,5 |
| NaOH 5%ig | 0 | 0 | 0 | 1 | 0 | 0 | 0 | 1 | 0 | 0 | 0 | 1 |
| VE-Wasser 1 | 0 | 0 | 1,5 | 1 | 0 | 0 | 0 | 1,5 | 0 | 0 | 0 | 2 |
| VE-Wasser 2 | 0 | 0 | 0 | 2 | 0 | 0 | 0 | 2 | 0 | 0 | 0 | 1 |
| VE-Wasser 3 | 0 | 0 | 0 | 2 | 0 | 0 | 0,5 | 1,5 | 0 | 0 | 1 | 2 |
| VE-Wasser 4 | 0 | 0 | 0 | 1 | 0 | 0 | 0,5 | 1,5 | 0 | 0 | 1 | 1 |
| **Summe Säure** | **0** | **0** | **0** | **20,5** | **0** | **0** | **0,5** | **20** | **0** | **0** | **0** | **19,5** |
| **Summe Wasser** | **0** | **0** | **1,5** | **6** | **0** | **0** | **1** | **6** | **0** | **0** | **2** | **6** |

**2. Sandtest (Kratzbeständigkeit)**

Beim Sandtest wird die Lackoberfläche mit Sand belastet (20g Quarz-Silbersand 1.5-2.0 mm). Der Sand wird in einen PE-Becher (Boden plan abgeschnitten) gegeben, der fest auf der Prüftafel befestigt wird. Es werden die gleichen Prüftafeln wie oben im Bürstentest beschrieben verwendet. Mittels eines Motorantriebes wird die Tafel mit dem Becher und dem Sand in Schüttelbewegungen versetzt. Die Bewegungen des losen Sandes verursacht dabei die Beschädigung der Lackoberfläche (100 Doppelhübe in 22s). Nach der Sandbelastung wird die Prüffläche vom Abrieb gereinigt, unter einem kalten Wasserstrahl vorsichtig abgewischt und anschließend mit Druckluft getrocknet. Gemessen wird der Glanz nach DIN 67530 vor und nach Beschädigung bei 20°.

Mit diesem Prüfverfahren wird die Beständigkeit (scratch resistance) von Lackoberflächen (Klarlacke und Decklacke) gegen Waschbürstenkratzer geprüft. Das Verfahren ist eine gute Nachstellung der Belastung einer Lackoberfläche

in einer Waschanlage.

Die Ergebnisse des Tests finden sich in der Tabelle 2.

**Tabelle 2: Ergebnisse des Sandtests**

| Glanzwerte[a)] | Zusammensetzung A | Zusammensetzung B | Zusammensetzung C |
|---|---|---|---|
| Ausgangsglanz | 84 | 84 | 84 |
| Restglanz | 53,5 | 55,6 | 56,8 |
| Glanz nach 2h, 40 °C | 55,3 | 58,0 | 60,1 |
| Glanz nach 2h, 60 °C | 57,1 | 63,3 | 68,2 |

a) = gemessen bei 20°C:

Die Ergebnisse des Bart-Tests einerseits und des Sandtests andererseits untermauern, daß die erfindungsgemäßen Zweikomponenten-Systeme (B und C) dem herkömmlichen ZweikomponentenSystemen (A) in der hohen Säurefestigkeit gleichkommen, dieses in der Kratzbeständigkeit, insbesondere in Reflowverhalten bei erhöhten Temperaturen, und dem Festkörpergehalt deutlich übertreffen.

## Patentansprüche

**1.** Beschichtungsmittel oder Klebstoff, enthaltend

a) mindestens ein Bindemittel,
b) mindestens einen Vernetzer und
c) mindestens ein stellungsisomeres Diethyloctandiol.

**2.** Das Beschichtungsmittel oder der Klebstoff nach Anspruch 1, **dadurch gekennzeichnet, daß** das Diethyloctandiol c) 2,4-Diethyl-octandiol-1,5 enthält oder hieraus besteht.

**3.** Das Beschichtungsmittel oder der Klebstoff nach einem der Ansprüche 1 oder 2, **dadurch gekennzeichnet, daß** das funktionalisierte Alkan c) hierin in einer Menge von 0,5 bis 25, vorzugsweise 1 bis 20 und insbesondere 2 bis 15 Gew.-%, bezogen auf die Gesamtmenge der Bestandteile a) + c), enthalten ist.

**4.** Das Beschichtungsmittel oder der Klebstoff nach einem der Ansprüche 1 bis 3, **dadurch gekennzeichnet, daß** es sich um ein Mehrkomponentensystem handelt, worin zumindest der Vernetzer b) bis zur bestimmungsgemäßen-Verwendung von den übrigen Komponenten getrennt gelagert wird.

**5.** Das Beschichtungsmittel oder der Klebstoff nach Anspruch 4, **dadurch gekennzeichnet, daß** es sich um ein Zweikomponentensystem handelt mit einer ersten Komponente, welche den Vernetzer b) enthält, und einer zweiten Komponente, welche das Bindemittel a) und das funktionalisierte Alkan c) enthält.

**6.** Das Beschichtungsmittel oder der Klebstoff nach einem der Ansprüche 1 bis 3, **dadurch gekennzeichnet, daß** es sich um ein Einkomponentensystem handelt, welches das Bindemittel a), den Vernetzer b) und das funktionalisierte Alkan c) enthält.

**7.** Verwendung des Beschichtungsmittels oder des Klebstoffs gemäß einem der Ansprüche 1 bis 6 zum Beschichten oder Verkleben von Kunststoff-, inklusive Folien-, Holz-, Glas-, Papier- oder Metalloberflächen oder in der Autoserien- und Autoreparaturlackierung als Klarlack, Decklack, Füller, Grundierung und/oder Unterbodenschutz.

**8.** Verfahren zur Herstellung von Beschichtungsmitteln oder Klebstoffen durch Vermischen ihrer Bestandteile, **dadurch gekennzeichnet, daß** man hierbei zumindest

a) mindestens ein Bindemittel,
b) mindestens einen Vernetzer und
c) mindestens ein stellungsisomeres Diethyloctandiol,

miteinander vermischt.

**9.** Das Verfahren nach Anspruch 8, **dadurch gekennzeichnet, daß** das stellungsisomere Diethyloctandiol, c) 2,4-Diethyl-octandiol-1,5 enthält oder hieraus besteht.

## Claims

**1.** Coating composition or adhesive comprising

a) at least one binder,
b) at least one crosslinker, and
c) at least one positionally isomeric diethyloctanediol.

**2.** The coating composition or adhesive according to Claim 1, **characterized in that** the diethyloctanediol c) consists of or comprises 2,4-diethyl-1,5-octanediol.

**3.** The coating composition or adhesive according to either of Claims 1 or 2, **characterized in that** the functionalized alkane c) is present therein in an amount from 0.5 to 25, preferably from 1 to 20 and, in particular, from 2 to 15% by weight, based on the overall amount of the constituents a) + c).

**4.** The coating composition or adhesive according to one of Claims 1 to 3, **characterized in that** it comprises a multi-component system in which at least the crosslinker b) is stored separately from the other components until its appropriate use.

**5.** The coating composition or adhesive according to Claim 4, **characterized in that** it comprises a two-component system having a first component which comprises the crosslinker b) and a second component which comprises the binder a) and the functionalized alkane c).

**6.** The coating composition or adhesive according to one of Claims 1 to 3, **characterized in that** it comprises a one-component system which comprises the binder a), the crosslinker b) and the functionalized alkane c).

**7.** Use of the coating composition or adhesive according to one of Claims 1 to 6 to coat or bond plastic surfaces, including film surfaces, wood surfaces, glass surfaces, paper surfaces or metal surfaces or in automotive OEM finishing and automotive refinishing as a clearcoat, topcoat, surfacer, primer and/or underbody protection.

**8.** Process for producing coating compositions or adhesives by mixing their constituents, **characterized in that** at least

a) at least one binder,
b) at least one crosslinker, and
c) at least one positionally isomeric diethyloctanediol,

are mixed with one another.

**9.** The process according to Claim 8, **characterized in that** the positionally isomeric diethyloctanediol c) consists of or comprises 2,4-diethyl-1,5-octanediol.

## Revendications

**1.** Composition de revêtement ou adhésif comprenant

a) au moins un liant,
b) au moins un agent de réticulation, et
c) au moins un diéthyloctanediol isomère de position.

**2.** Composition de revêtement ou adhésif selon la revendication 1, **caractérisé**(e) en ce que le diéthyloctanediol c) comprend la 2,4-diéthyl-1,5-octanediol ou est constitué de celui-ci.

**3.** Composition de revêtement ou adhésif selon l'une des revendications 1 ou 2, **caractérisé**(e) en ce que l'alcane

fonctionnalisé c) y est présent en une quantité de 0,5 à 25, de préférence de 1 à 20, et en particulier de 2 à 15 % en poids, par rapport à la quantité des constituants a) + c).

**4.** Composition de revêtement ou adhésif selon l'une des revendications 1 à 3, **caractérisé**(e) en ce qu'il s'agit d'un système à composants multiples, dans lequel au moins l'agent de réticulation b) est stocké séparément des autres composants jusqu'à l'utilisation appropriée.

**5.** Composition de revêtement ou adhésif selon la revendication 4, **caractérisé**(e) en ce qu'il s'agit d'un système à deux composants avec un premier composant comprenant l'agent de réticulation b) et un deuxième composant comprenant le liant a) et l'alcane fonctionnalisé c).

**6.** Composition de revêtement ou adhésif selon l'une des revendications 1 à 3, **caractérisé**(e) en ce qu'il s'agit d'un système à un seul composant comprenant le liant a), l'agent de réticulation b) et l'alcane fonctionnalisé c).

**7.** Utilisation de la composition de revêtement ou adhésif selon l'une des revendications 1 à 6 pour revêtir ou coller des surfaces plastiques, y compris des surfaces de films, de bois, de verre, de papier ou de métal, ou pour le revêtement en série d'automobiles et les retouches d'automobiles en tant que couche transparente, couche de finition, couche de remplissage, couche d'apprêt et/ou protection du dessous de caisse.

**8.** Procédé de production de compositions de revêtements ou d'adhésifs en mélangeant leurs constituants, **caractérisé en ce qu'**

a) au moins un liant,
b) au moins un agent de réticulation, et
c) au moins un diéthyloctanediol isomère de position

sont au moins mélangés les uns avec les autres.

**9.** Procédé selon la revendication 8, **caractérisé en ce que** le diéthyloctanediol isomère de position c) comprend la 2,4-diéthyl-1,5-octanediol ou est constitué de celui-ci.